# EUROPÄISCHE PATENTSCHRIFT

(11) **EP 2 052 843 B1**
(45) Veröffentlichungstag und Bekanntmachung des Hinweises auf die Patenterteilung: **06.12.2017**
(21) Anmeldenummer: 08017697.7
(22) Anmeldetag: 09.10.2008
(51) Int. Cl.: B29C 51/04, B29C 51/10, B29C 51/46

(54) **Verfahren zum Betreiben einer Vorrichtung zum Herstellen von Formteilen aus einer thermoplastischen Kunststofffolie**
Method for operating a device for manufacturing shaped pieces made of thermoplastic material
Procédé de fonctionnement d'un dispositif destiné à la fabrication de pièces de formage à partir d'une feuille de matière synthétique thermoplastique

(30) Priorität: 22.10.2007 DE 102007050722
(43) Veröffentlichungstag der Anmeldung: 29.04.2009
(73) Patentinhaber: Gabler Thermoform GmbH & Co. KG, 23568 Lübeck (DE)
(72) Erfinder: Rowedder, Axel, 13623 Ahrensbök (DE)
(74) Vertreter: Grosse, Wolf-Dietrich Rüdiger

(56) Entgegenhaltungen:
- EP-A1- 1 103 365
- CA-A1- 2 042 194

## Beschreibung

Die Erfindung betrifft ein Verfahren zum Betreiben einer Vorrichtung zum Herstellen von Formteilen gemäß dem Oberbegriff des Anspruchs 1. So ein Verfahren wird in EP 1 103 365 A1 offenbart. Eine Besonderheit des Thermoformprozesses nach dem Stand der Technik besteht darin, dass die Formluft beim Einsatz der eingangs genannten formluftreduzierten Werkzeuge, d.h. die Vorstrecker bzw. Streckhelfer sind an einer Kontaktfläche der ihnen zugeordneten Niederhalter abgedichtet, aus verfahrenstechnischen Gründen die Folienoberseite erst dann beaufschlagen kann, wenn sich die Vorstrecker im unteren Totpunkt befinden. Die Kunststofffolie legt sich an die gekühlte, von dem Werkzeug bereitgestellte Form (Formnest) an und kühlt aus, wobei die Kühlung eine gewisse Zeit in Anspruch nimmt. Während dieser Kühlzeit, in der in der Form der Formdruck ansteht, verbleiben die Vorstrecker in ihrer Position im unteren Totpunkt. Erst nach dem Abbau des Formdrucks verfährt der Vorstrecker in seine obere Totpunkt-Position. Unmittelbar hiernach wird das hergestellte Formteil bzw. der fertige Artikel durch einen weiteren vertikalen Kurzhub ausgestanzt (Kombi-Durchfallschnitt-Verfahren), anschließend das Werkzeug geöffnet und die fertigen Artikel ausgeworfen. Ein alternatives Verfahren sieht vor, dass das Werkzeug ohne Stanzvorgang geöffnet und die fertigen Artikel mit der Kunststofffolie aus dem Werkzeug zu einer nachgeschalteten Stanze transportiert werden (getrenntes Formen/Stanzen) oder partiell gestanzt und mit verbleibenden Haltepunkten zwischen der Kunststofffolie und den Formteilen zu einer nachgeschalteten Stapelstation transportiert werden (Kombi-Bandstahl-Verfahren).

Die für die Zykluszeit und somit Ausstoßleistung bestimmenden Kriterien sind die produktspezifische Kühlzeit und die Vorstreckzeit, die zusammen die produktspezifische Formzeit bilden. Die Formzeit hängt weiterhin ab von der Artikelgeometrie, dem Folienmaterial, der Foliendicke und dem Verfahrweg des Vorstreckers, wie außerdem auch die Maschinenzykluszeit bestimmend für die Ausstoßleistung ist.

Zur Verkürzung der Zykluszeit tragen die formluftreduzierten Werkzeuge bei, weil sich Formluft einsparen und eine erhöhte Taktleistung aufgrund verminderter Formluft-Befüll- und Entlüftungszeiten erreichen lässt. Dadurch allerdings, dass die Formluft mit einem hohen Druck nur einseitig auf die Vorstrecker wirkt, wird auf jeden Vorstrecker eine hohe Kraft entgegen der Verschieberichtung zum Vorformen aufgebaut. Durch beispielsweise die EP 1447202 A1 ist es daher bekannt geworden, eine Halteeinrichtung zum Festhalten der Vorstrecker in einer bestimmten Position vorzusehen. Die Halteeinrichtung besteht aus einer durch Ventile regelbaren, hydraulisch oder pneumatisch betätigbaren Kolben-Zylinder-Einheit bzw. Einheiten, die die durch die Formluft entstehenden Kräfte auf die Vorstrecker durch ein sich in den Kolben-Zylinder-Einheiten ausbildendes Flüssigkeitspolster aufnehmen.

Diese bekannte Halteeinrichtung kann nach einem voreingestellten Hub auf die Vorstrecker wirken. Dies setzt jedoch einen Schaltvorgang mit einer Halteposition der Vorstreckeranstellbewegung voraus, weil in jedem Fall vor dem Zuschalten der Formluft die mitgeschleppten Kolben der Zylindereinheiten mittels gesteuerten Ventilen blockiert und mit der einsetzenden Formluft abgeglichen werden müssen, indem die Zulaufleitung geschlossen wird. Mit Beendigung des Formprozesses muss zudem vor dem Hochfahren des Vorstreckers die Formluft entlüftet sein. Somit ist bedingt durch die notwendigen Schalt- und Ruhezeiten eine Erhöhung der Formzeit unumgänglich. Die Formzeit wird folglich definiert durch die Abwärtsverfahrzeit der Vorstrecker, die Formluftzeit und die Aufwärtsverfahrzeit der Vorstrecker.

Der Erfindung liegt daher die Aufgabe zugrunde, ein gattungsgemäßes Verfahren zu schaffen, das beim Betrieb mit einem formluftreduzierten Werkzeug weiter verringerte Zykluszeiten ohne die genannten Nachteile ermöglicht.

Diese Aufgabe wird erfindungsgemäß durch den kennzeichnenden Teil des Anspruchs 1 gelöst. Es lässt sich damit eine Antriebsachse verwirklichen, bei der ohne eine externe Halteeinrichtung bzw. Bremse sogleich ein leistungsstarker Vorstreckerantrieb, wie ein Servomotor, der integriert einen Drehgeber oder Resolver aufweisen kann, oder ein hydraulischer bzw. pneumatischer Verfahrantrieb, die aus der Formluft entgegenwirkenden Kräfte aufnimmt. Dies beispielsweise bei einem 54-fach-Werkzeug mit dort bis 100 KN auftretenden Formluftkräften. Alle notwendigen Bewegungs- und Rückhaltekräfte werden von ein und demselben Antrieb aufgebracht.

Die Antriebseinrichtung ist über den gesamten Verfahrweg unter anstehender Formluft steuer- und regelbar, so dass die permanent anstehende Formluft während des Verfahrens des Vorstreckers zuschaltbar ist. Da keine Schaltvorgänge mit Haltepositionen des Antriebs bzw. der Antriebseinrichtung erforderlich sind, dieser bzw. diese vielmehr durchlaufen kann, lässt sich gegenüber den herkömmlichen Betriebssystemen eine deutlich erhöhte Taktleistung erreichen, z. B. bei der Produktion von Trinkbechern bis zu 40 % verkürzt. Außerdem wird die Bedienung vereinfacht und die Störanfälligkeit verringert. Es ist keine zusätzliche Verriegelung oder Energiebeaufschlagung, wie Pneumatik oder Hydraulik, mehr erforderlich, d. h. der oder die Vorstrecker kann bzw. können ohne Einbringung einer zusätzlichen, zu steuernden Antriebsenergie unter Formluftlast verfahren werden. Erfindungsgemäß ist vorgesehen, das dass die permanent anstehende Formluft synchron während der Abwärtsbewegung der Vorstrecker zu einem beliebigen Zeitpunkt zugeschaltet werden kann und die Vorstrecker bei in der Form anstehendem Formluftdruck und nachströmender Formluft aufwärts bewegt werden. Die Formluft kann somit einerseits beliebig und damit zum Abgleich der Formluft-Befüllzeit oder gegebenenfalls auch zur positiven Beeinflussung der Materialverteilung im Bodenbereich voreilend zum bzw. nah vor dem Erreichen des unteren Totpunktes des Vorstreckers zugeschaltet werden. Andererseits kann der Vorstrecker schon synchron zur Formzeit bei unverändert nachströmender Formluft und in der Form somit anstehendem Formluftdruck zurück in die obere Ausgangslage bzw. in den oberen Totpunkt verfahren werden.

Weitere Einzelheiten und Merkmale der Erfindung ergeben sich aus den Ansprüchen und der nachfolgenden Beschreibung eines in den Zeichnungen dargestellten Ausführungsbeispiels der Erfindung. Es zeigen:
- Figur 1: als Einzelheit eines hinlänglich bekannten Thermoformautomaten in einem Teil-Längsschnitt eine Vorstrecker-Antriebseinrichtung, vor dem Schließen des zweiteiligen Werkzeugs mit dem Vorstrecker in der oberen Totpunkt-Ausgangslage;
- Figur 2: als Einzelheit in einem Querschnitt die Position des Vorstreckers in der vor dem Vorstrecken geschlossenen Lage des Werkzeugs, ohne Antriebseinrichtung dargestellt;
- Figur 3: den Vorstrecker der Figur 2 bei Beendigung des Vorstreckvorgangs mit sich in der unteren Endlage bzw. unteren Totpunktlage befindendem Vorstrecker;
- Figur 4: Diagramm der Formzeit mit nach dem Stand der Technik zusätzlich zuschaltbarer, den/die Vorstrecker mit einer Rückhaltekraft beaufschlagender Haltevorrichtung; und
- Figur 5: Diagramm der Formzeit mit erfindungsgemäßer Betriebsweise ohne zusätzliche Haltevorrichtung.

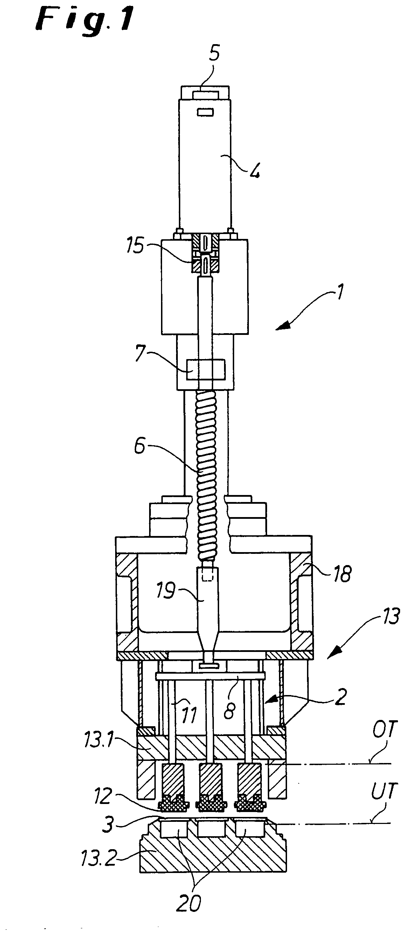

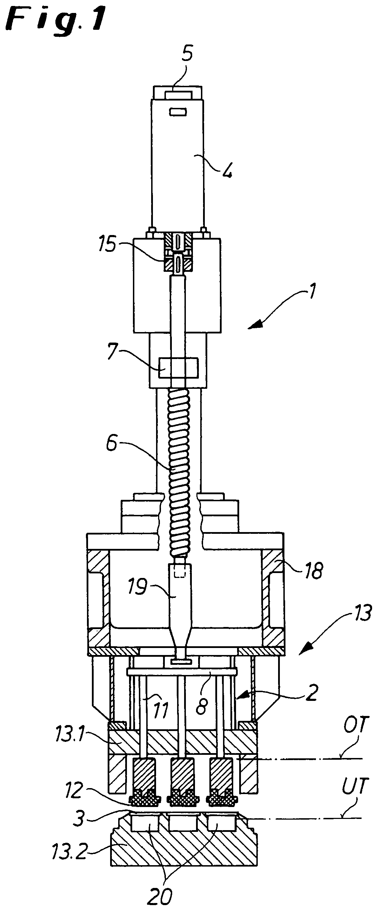

Die Fig. 1 zeigt von einer Thermoformmaschine eine Vorstrecker-Antriebseinrichtung 1, die hier einen leistungsstarken Servomotor 4 mit einem Resolver oder Inkrementalgeber 5 und eine Kupplung 15 umfasst, über die sich eine Kugelrollspindel 6 mit dazugehöriger Mutter 7 auf und ab bewegen lässt. Die Kugelrollspindel 6 ist über eine Kupplungsstange 19 mit einer Platte 8 verbunden, die eine der Zahl der Formnester 20 entsprechende Anzahl von Führungsstangen 11 mit daran an ihren den Formnestern 20 zugewandten Enden auf die Werkzeugform bzw. die tief zu ziehenden Artikel abgestimmten Vorstreckern 12 trägt. Bei Verstellbewegungen wird die Vorstreckerplatte 8 mittels der Führungsstangen 11 geführt. Die Vorstreck-Antriebseinrichtung 1 ist ortsfest an einer Oberbrücke 18 befestigt. Ein linear geführtes Schubrohr der Antriebseinrichtung 1 überträgt die axiale Verschiebung auf die Vorstreckerplatte 8 und somit die Vorstrecker 12. Zum Herstellen der Formteile bzw. fertigen Artikel in den Formnestern 20 aus der intermittierend zugeführten, erwärmten thermoplastischen Kunststofffolie 3 wird diese durch den Einsatz der Vorstrecker 12 somit zunächst mechanisch vorgereckt.

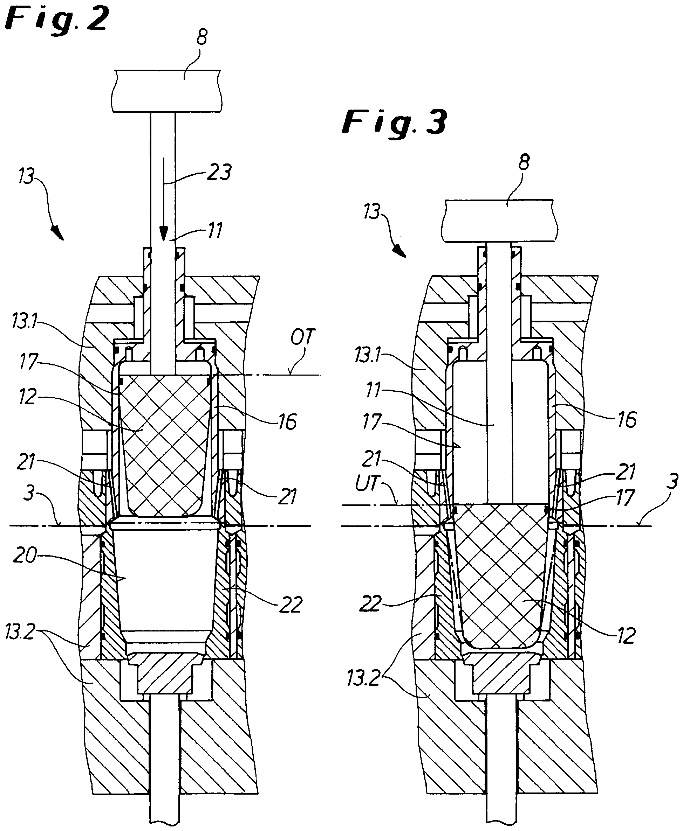

Das aus einem Oberwerkzeug 13.1 und einem Unterwerkzeug 13.2 bestehende Werkzeug 13 ist, wie sich näher den Fig. 2 und 3 entnehmen lässt, als formluftreduziertes Werkzeug ausgebildet. Jeder Vorstrecker 12 ist hierzu an Kontaktflächen 17 von im Oberwerkzeug 13.1 federnd angeordneten Niederhaltern 16 abgedichtet geführt. Außerdem ist das Oberwerkzeug 13.1 mit auf die Kunststofffolie 3 gerichteten Formluftbohrungen 21 versehen. Das Unterwerkzeug 13.2 nimmt ein die Formnester 20 bereitstellendes, hier als Schnittstempel 22 ausgebildetes Formteil auf. Die von einer nicht gezeigten Versorgungsquelle permanent anstehende Formluft ist zu einem beliebigen Zeitpunkt mittels Ventil synchron zur bzw. während der Verfahrzeit der Vorstrecker 12 aus ihrer oberen Endlage OT bis in die untere Endlage UT zuschaltbar, ohne dass dabei die Abwärtsbewegung (vgl. Pfeil 23 in Fig. 2) unterbrochen werden muß.

Die Fig. 2 zeigt das zum Umformprozess geschlossene Werkzeug 13 mit dem oberhalb der Kunststofffolie 3, die durch Unterstützung des Niederhalters 16 eingespannt wird, in Pfeilrichtung 23 abwärts bewegtem Vorstrecker 12. Einhergehend mit dem weiteren Absenken des Vorstreckers 12 in das Formnest 20 kann voreilend über die Formluftbohrung 21 und somit synchron zur weiteren Verfahrzeit des Vorstreckers 12 über die Formluftbohrungen 21 die benötigte Formluft eingeleitet werden, sobald der Vorstrecker 12 sich der UT-Position angenähert hat. Mit der weiteren Abwärtsbewegung des Vorstreckers 12 bis in die untere Endlage bzw. in den unteren Totpunkt UT wird im Zusammenspiel mit der Formluft der fertige Artikel ausgeformt. Der gesamte Bewegungsablauf der Vorstrecker bzw. die Vorstrecker-Antriebseinrichtung 1 wird von einer integrierten speicherprogrammierbaren Steuerung überwacht und gesteuert.

Das Ende des Vorstreckprozesses und Umformvorgangs ist in Fig. 3 dargestellt. Die in Pfeilrichtung 23 vollständig abgesenkten Vorstrecker 12 befinden sich in ihrer unteren Totpunktlage UT und haben unterstützt durch die über die Formluftbohrungen 21 zugeführte Formluft die Kunststofffolie 3 an die gekühlte Form bzw. die Formnester 20 angelegt. Die Folie beginnt auszukühlen. Bereits jetzt kann der Vorstrecker 12 unter anstehendem Formluftdruck und nachströmender Formluft in seine obere Ausgangs- bzw. Endlage OT verfahren werden. Wenn dann der Kühlprozess abgeschlossen ist, wird der fertige Artikel durch einen vertikalen Kurzhub des Werkzeugs 13 mit Hilfe des Schnittstempels 22 des Unterwerkzeugs 13.2 ausgestanzt und ausgeworfen bzw. abtransportiert, bevor der nächste Fertigungsprozess beginnt.

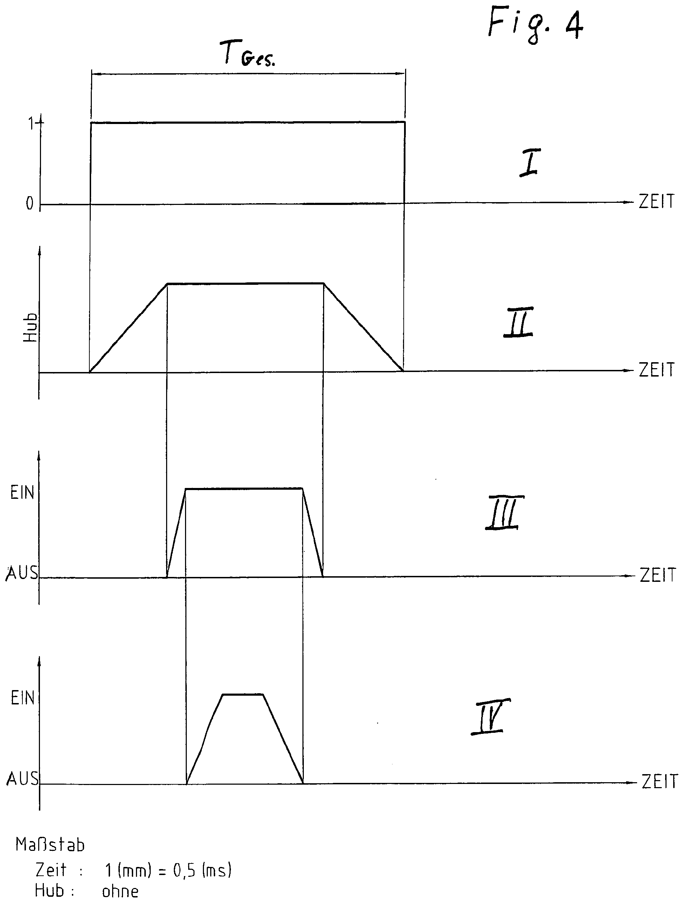

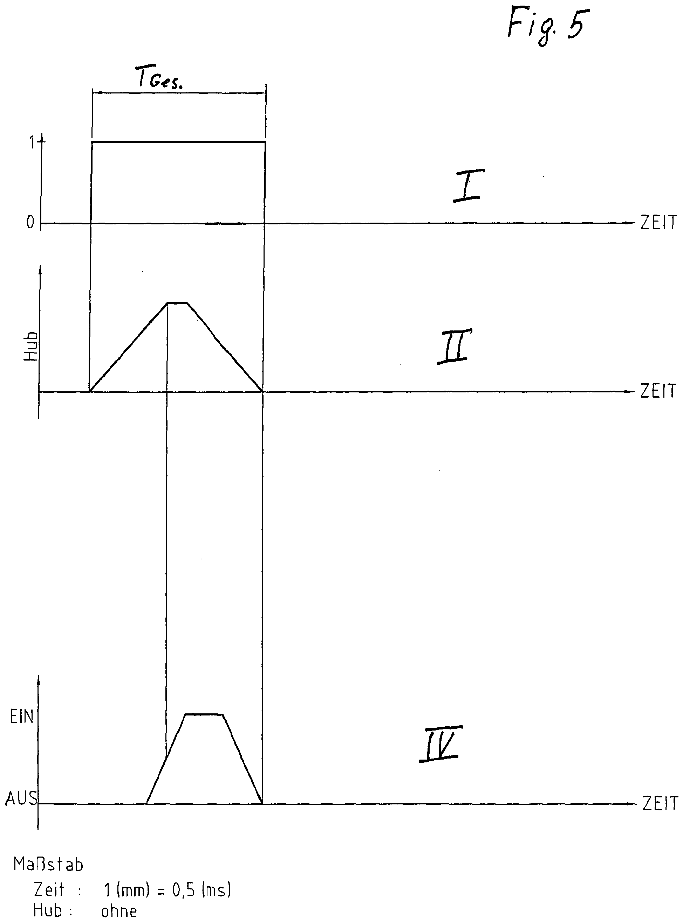

Beim Vergleich der übereinstimmend einen vereinfachten Verfahrensablauf wiedergebenden Diagramme der Fig. 4 und 5 lässt sich entnehmen, wobei I die Formzeit (Werkzeug in Formstellung), II die Verfahrzeit des Vorstreckers/der Vorstrecker, III den Schaltvorgang einer Vorstrecker-Haltevorrichtung und IV die während der Produkt-/Artikelauskühlung anstehende Formluft, jeweils über die Zeit, angibt, dass die Formzeit I bei einem Thermoformprozess ohne zusätzlich zuschaltbare Rückhaltekraft bzw. Haltevorrichtung (Figur 5) I minus III beträgt und damit gegenüber der Formzeit mit Haltevorrichtung (Figur 4) eine Zeitersparnis von 40 % ermöglicht.

### Bezugszeichenliste:

- 1: Vorstrecker-Antriebseinrichtung
- 2: Rahmen
- 3: Kunststofffolie
- 4: Servomotor
- 5: Resolver/Inkrementalgeber
- 6: Kugelrollspindel
- 7: Mutter
- 8: Platte
- 11: Führungsstange
- 12: Vorstrecker
- 13: Werkzeug
- 13.1: Oberwerkzeug
- 13.2: Unterwerkzeug
- 15: Kupplung
- 16: Niederhalter
- 17: Kontaktfläche
- 18: Oberbrücke
- 19: Kupplungsstange
- 20: Formnest
- 21: Formluftbohrung
- 22: Schnittstempel-Formteil
- 23: Pfeil (Schließ-/Abwärtsbewegung)
- OT: obere Endlage/oberer Totpunkt; obere Ausgangslage
- UT: untere Endlage/unterer Torpunkt

## Patentansprüche

1. Verfahren zum Betreiben einer Vorrichtung zum Herstellen von Formteilen, die aus einer im intermittierenden Transport zwischen ein aus einem Oberwerkzeug (13.1) und einem Unterwerkzeug (13.2) bestehendes Werkzeug (13) zugeführten, erwärmten thermoplastischen Kunststofffolie (3) mittels Formluft unter Zuhilfenahme von nach dem Schließen des Werkzeugs pro Formnest (20) in die Kunststofffolie eintauchenden, von einer Antriebseinrichtung (1) beaufschlagten Vorstreckern (12) tief gezogen werden, wobei jeder Vorstrecker (12) in einem zugeordneten Niederhaltermittel (16) abgedichtet geführt wird, wobei die Vorstrecker (12) aus ihrer Ausgangslage (OT) bis in die untere Endlage (UT) und nach dem Formvorgang zurück in die Ausgangslage (OT) ohne Aufbringung einer zur Antriebseinrichtung (1) zusätzlichen, der durch die Formluftlast auf die Vorstrecker (12) entstehenden Kräfte entgegenwirkenden, Rückhaltekraft verfahren und gehalten werden, wobei die Rückhaltekraft von der auch die Vorstrecker (12) verfahrenden Antriebseinrichtung (1; 4) aufgenommen wird, wobei die Formluft während der Abwärtsbewegung der Vorstrecker (12) zu einem beliebigen Zeitpunkt zugeschaltet werden kann **dadurch gekennzeichnet, dass** die Vorstrecker (12) bei in der Form anstehendem Formluftdruck und nachströmender Formluft aufwärts bewegt werden.

## Claims

1. A method for operating a device for producing moldings from a heated thermoplastic plastic film (3) which is fed in intermittent transport between a tool (13) consisting of an upper die (13.1) and a lower die (13.2) and which is deep-drawn by means of forming air with the help of prestretchers (12) which, after closing of the tool, plunge into each mold cavity (20) while being acted on by a drive unit (1), each prestretcher (12) being sealingly guided in an associated hold-down means (16),
wherein the prestretchers (12) move from their starting position (OT) up to the lower end position (UT) and after the molding process back into the starting position (OT) and are held without applying, in addition to the drive unit (1), a retaining force that counteracts the forces resulting from the forming air load on the prestretchers (12), wherein the retaining force is absorbed by the drive unit (1; 4) which also moves the prestretchers (12),
wherein the forming air can be switched on at any time during the downward movement of the prestretchers (12), **characterized in that** the prestretchers (12) can be moved upwards with the forming air pressure prevailing in the mold and with new forming air flowing in.

## Revendications

1. Procédé destiné à faire fonctionner un dispositif pour la fabrication de pièces moulées qui sont embouties à partir d'un film (3) en matière thermoplastique chauffé, alimenté par un transport intermittent entre un outil (13) constitué d'un outil supérieur (13.1) et d'un outil inférieur (13.2) au moyen d'air de formage, à l'aide d'étireurs (12) plongeant par cavité de moule (20) dans le film en matière plastique, après la fermeture de l'outil, sollicités par un système d'entraînement (1), chaque étireur (12) étant guidé de manière étanchéifiée dans un moyen serre-flanc (16) associé,
les étireurs (12) étant déplacés de leur position initiale (OT) jusqu'à la position finale inférieure (UT) et après le processus de formage, en retour dans la position initiale (OT) et maintenus sans application d'une force de retenue supplémentaire au système d'entraînement (1), s'opposant aux forces produites par la charge de l'air de formage sur les étireurs (12), la force de retenue étant absorbée par le système d'entraînement (1 ; 4) déplaçant également les étireurs (12),
pendant le déplacement vers le bas des étireurs (12), l'air de formage pouvant être mis en circuit à un moment voulu, **caractérisé en ce**
**qu'**en présence d'air de formage dans le moule et de sillages d'air de formage, les étireurs sont déplacés vers le haut.
